# EUROPÄISCHE PATENTSCHRIFT

(11) **EP 3 736 200 B1**
(45) Veröffentlichungstag und Bekanntmachung des Hinweises auf die Patenterteilung: **07.01.2026**
(21) Anmeldenummer: 20172523.1
(22) Anmeldetag: 30.04.2020
(51) Int. Cl.: B62K 21/14, B62K 21/18, B62K 21/22, B62K 21/04, B62K 19/32, B62K 21/26, B62K 3/04

(54) **LENKERVORBAU SOWIE VORBAUSYSTEM**
HANDLEBAR STEM AND STEM SYSTEM
POTENCE ET SYSTÈME DE POTENCE

(30) Priorität: 07.05.2019 DE 202019102546 U
(43) Veröffentlichungstag der Anmeldung: 11.11.2020
(73) Patentinhaber: Canyon Bicycles GmbH, 56073 Koblenz (DE)
(72) Erfinder: Wagner, Lars, 64287 - Darmstadt (DE); Sömen, Matej, 56077 - Koblenz (DE)
(74) Vertreter: dompatent

(56) Entgegenhaltungen:
- DE-A1- 102010 026 504
- DE-U1- 202014 004 397
- DE-U1- 29 715 537
- US-A- 2 294 839
- US-A- 2 523 402
- US-A- 608 021

## Beschreibung

Die Erfindung betrifft einen Lenkervorbau für einen Fahrradlenker, insbesondere für einen Rennradlenker. Ferner betrifft die Erfindung ein Vorbausystem für einen Rennradlenker mit einem erfindungsgemäßen Lenkervorbau.

Der Vorbau des Lenkers ist einerseits mit einem Gabelschaft und andererseits mit dem Fahrradlenker verbunden. Hierbei kann die Verbindung mit dem Lenker, insbesondere bei modernen Rennradlenkern, auch einstückig ausgebildet sein. Üblich ist ferner eine Verbindung über einen Klemmmechanismus. Die Verbindung des Vorbaus mit dem Gabelschaft erfolgt üblicherweise über eine Klemmverbindung. Hierbei ist der Gabelschaft mit der Vorderradgabel verbunden bzw. einstückig ausgebildet, wobei die Vorderradgabel insbesondere zwei Gabelbeine aufweist, die über eine Gabelbrücke miteinander verbunden sind, wobei sodann die Gabelbrücke mit dem Gabelschaft verbunden ist bzw. insbesondere einstückig ausgebildet ist.

Zur Verbesserung des Fahrkomforts ist es beispielsweise bei Trackingrädern und Mountainbikes bekannt, gefederte Vorderradgabeln vorzusehen. Diese werden bei Rennrädern jedoch aufgrund des höheren Gewichts und der geringeren Verwindungssteifigkeit nicht eingesetzt. Zur Komfortverbesserung ist es bei ungefederten Gabeln, die insbesondere bei Rennrädern eingesetzt werden, bekannt, die Gabelbeine der Vorderradgabel flexibler zu gestalten. Hierbei konnten jedoch nur geringe Verbesserungen erzielt werden, da bei Erhöhung der Flexibilität der Gabelbeine die Steifigkeit der Gabel und somit das Fahrverhalten negativ beeinflusst wird.

Ein Lenkervorbau mit den Merkmalen des Oberbegriffs des Anspruchs 1 ist in DE 20 2014 004 397 beschrieben.

Aufgabe der Erfindung ist es, einen Lenkervorbau, der insbesondere für Rennradlenker geeignet ist, zu schaffen, mit dem der Fahrkomfort verbessert werden kann. Ferner ist es Aufgabe, ein entsprechendes Vorbausystem mit einem derartigen Lenkervorbau zu schaffen.

Die Lösung der Aufgabe erfolgt durch einen erfindungsgemäßen Lenkervorbau gemäß Anspruch 1 bzw. ein Vorbausystem gemäß Anspruch 3.

Der erfindungsgemäße Lenkervorbau, der insbesondere für Rennradlenker geeignet ist und durch den bei Rennradlenkern der Komfort verbessert werden kann, weist ein Hauptelement auf, das zur Verbindung mit einem Lenker an einem vorderen Ende eine Lenkeraufnahme aufweist. Das vordere Ende ist hierbei das Ende des Hauptelements, das bei montiertem Lenkervorbau in Fahrtrichtung weist und mit dem Lenker verbunden ist. Hierbei kann die Verbindung mit dem Lenker über einen Klemmmechanismus, ein Klemmelement oder dergleichen erfolgen. Ferner ist es möglich, dass das Hauptelement des Lenkervorbaus einstückig mit dem Lenker verbunden ist.

Des Weiteren ist das Hauptelement des erfindungsgemäßen Lenkervorbaus an einem dem vorderen Ende gegenüberliegendem hinteren Ende mit einem Vorbauschaft verbunden. Die Verbindung mit dem Vorbauschaft kann über ein Halte- oder ein Klemmelement erfolgen, wobei es auch möglich ist, dass der Vorbauschaft einstückig mit dem Hauptelement ausgebildet ist. Der Vorbauschaft dient zur Verbindung mit einer Fahrradgabel, insbesondere einem Gabelschaft der Fahrradgabel.

Erfindungsgemäß weist der Vorbauschaft einen unrunden Querschnitt auf. Hierdurch ist ein Flexen bzw. Verbiegen des Vorbauschafts insbesondere relativ zum Gabelschaft möglich. Für eine derartige Flexibilität können beispielsweise durch Unebenheiten in der Fahrbahn in die Fahrradgabel eingeleitete Stöße abgefedert werden und werden nur noch zu einem geringeren Anteil in den Fahrradlenker und somit in die Handgelenke des Fahrradfahrers übertragen. Hierdurch ist der Fahrkomfort insbesondere bei einem Verbinden des erfindungsgemäßen Lenkervorbaus mit einer ungefederten Fahrradgabel, wie sie üblicherweise bei Rennrädern vorgesehen ist, deutlich verbessert.

Der Vorbauschaft weist in Längsrichtung des Hauptelements, das heißt in montiertem Zustand in Fahrtrichtung, eine geringere Abmessung als quer zur Längsrichtung auf. Erfindungsgemäß ist der Vorbauschaft queroval ausgebildet. Ein derartiger breiterer Vorbauschaft im Verhältnis zur Längsrichtung weist den Vorteil auf, dass ein Biegen oder Flexen in Längsrichtung möglich ist, wobei quer zur Längsrichtung eine höhere Steifigkeit realisiert ist. Hierdurch kann der Fahrtkomfort deutlich verbessert und insbesondere Stöße gut abgefangen werden.

Des Weiteren betrifft die Erfindung ein Vorbausystem, das insbesondere für Rennradlenker vorgesehen ist. Das Vorbausystem weist eine Vorderradgabel mit zwei Gabelbeinen, die über eine Gabelbrücke miteinander verbunden sind sowie einen mit der Gabelbrücke verbundene Gabelschaft auf. Die Gabelbeine können mit der Gabelbrücke einstückig ausgebildet sein. Ebenso ist es möglich, dass die Gabelbrücke einstückig mit der Gabelschaft ausgebildet ist. Ferner weist das erfindungsgemäße Vorbausystem einen Lenkervorbau auf, wie vorstehend beschrieben und insbesondere vorzugsweise weitergebildet. Zur Verbindung des Gabelschafts mit dem Vorbauschaft weist der Gabelschaft eine Aufnahmeöffnung bzw. Ausnehmung zur Aufnahme des Vorbauschafts auf. Der Vorbauschaft kann somit in die Ausnehmung bzw. Öffnung des Gabelschafts eingesteckt werden. Bevorzugt ist es hierbei, dass der Vorbauschaft nicht vollständig in die Aufnahmeöffnung des Gabelschafts eingesteckt ist, sondern aus dieser hervorsteht. Hierdurch ist es möglich, ein festes Verbinden zwischen Gabelschaft und Vorbauschaft einerseits zu realisieren und andererseits den vorstehenden Teil des Vorbauschafts im montierten Zustand biegen bzw. flexen zu können.

Vorzugsweise ist eine Fixiereinrichtung zur Verbindung des Vorbauschafts mit dem Gabelschaft vorgesehen. Bei der Fixiereinrichtung kann es sich um eine Klemmeinrichtung handeln, durch die der Vorbauschaft in der Aufnahmeöffnung des Gabelschafts klemmend fixiert wird. Auch kann die Verbindung durch eine Schraubverbindung oder dergleichen erfolgen. Das Vorsehen einer Klemmverbindung hat den Vorteil, dass es möglich ist, die Klemmverbindung derart auszugestalten, dass ein stufenweises Klemmen möglich ist. Insofern kann stufenfrei gewählt werden, wie weit der Vorbauschaft gegenüber dem Gabelschaft vorsteht. Dies kann einerseits zur Einstellung der Flexeigenschaften und auch Einstellung der Lenkerhöhe genutzt werden.

Vorzugsweise ist zwischen dem Vorbauschaft und dem Gabelschaft ein Klemmelement zum Halten der Flexiereinrichtung angeordnet. Dieses Klemmelement weist beispielsweise ein Klemmmittel in Form einer Schraube und ein Klemmteil auf. Das Klemmteil wird durch die Schraube fixiert und bewirkt ein klemmendes Fixieren des Vorbauschafts und des Gabelschafts. Insbesondere ist das Klemmmittel wie die Schraube von außen beispielsweise durch eine Öffnung im Gabelrohr des Fahrradrahmens zugänglich.

Erfindungsgemäß weist der Gabelschaft in einem in Richtung des Halteelements des Lenkervorbaus weisenden Bereich einen Hohlraum auf. In diesem Hohlraum ist im montierten Zustand der Vorbauschaft angeordnet bzw. durchdringt diesen insbesondere in Längsrichtung des Gabelschafts. Besonders bevorzugt ist es, dass der Vorbauschaft geringere Außenabmessungen aufweist als die Innenabmessungen des Hohlraums. Der Vorbauschaft füllt den Hohlraum somit nicht vollständig aus. Dies hat den Vorteil, dass der Vorbauschaft in den Hohlraum besondere in Längsrichtung des Hauptelements des Lenkervorbaus bzw. in Fahrtrichtung bewegt bzw. gebogen werden kann. Das Flexen des Vorbauschafts erfolgt somit vorzugsweise im Wesentlichen innerhalb des Hohlraums des Gabelschafts.

Bevorzugt ist es, dass eine Vorderseite und/oder eine Rückseite des Vorbauschafts einen Abstand zur jeweiligen Innenseite, das heißt in Fahrtrichtung zur vorderen oder hinteren Innenseite des Gabelschafts aufweist. Auch quer zur Fahrtrichtung weist der Vorbauschaft vorzugsweise geringere Abmessungen als der Innenraum des Hohlraums des Gabelschafts auf, da ansonsten ein Flexen des Vorbauschafts nur in einem geringen Winkelbereich möglich wäre. Vorzugsweise kann der Vorbauschaft in der Aufnahme, d. h. der Öffnung des Gabelschafts in unterschiedlichen Positionen, insbesondere stufenfrei, verschiebbar fixiert werden. Dies hat zur Folge, dass der Vorbauschaft und somit auch das mit dem Vorbauschaft verbundene Hauptelement des Lenkervorbaus in unterschiedlichen Höhen angeordnet ist. Vorzugsweise ist daher mindestens ein Abstandselement zwischen einer Oberseite des Gabelschafts und einer Unterseite des Hauptelements angeordnet. Besonders bevorzugt ist es hierbei, dass das mindestens eine Abstandselement elastisch ausgebildet ist. Bevorzugt sind mehrere Abstandselemente vorgesehen, wobei es ausreichend ist, dass nur ein einziges oder nur einige der Abstandselemente elastisch ausgebildet sind. Die elastische Ausbildung zumindest eines Abstandselements stellt sicher, dass der Vorbauschaft insbesondere innerhalb des Hohlraums des Gabelschafts geflext bzw. gebogen werden kann.

Nachfolgend wird die Erfindung anhand einer bevorzugten Ausführungsform unter Bezugnahme auf die anliegenden Zeichnungen näher erläutert. Es zeigen:
- Fig. 1: eine schematische teilweise geschnittene Ansicht eines Vorbausystems, wobei auch ein Teil des Fahrradrahmens sichtbar ist und
- Fig. 2: eine schematische Schnittansicht des Gabelschafts im Bereich II in Fig. 1.

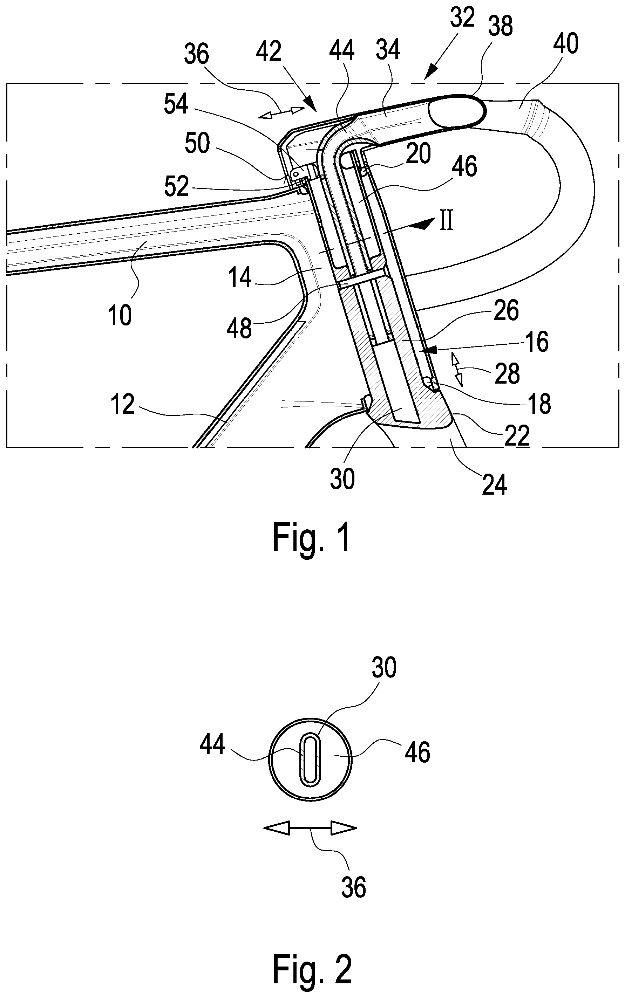

Der in Fig. 1 schematisch dargestellte Bereich des Fahrradrahmens weist ein Oberrohr 10, ein Unterrohr 12 sowie ein sowohl mit dem Oberrohr 10 als auch mit dem Unterrohr 12 verbundenes Gabelrohr 14 auf. In dem Gabelrohr 14 ist ein Gabelschaft 16 über zwei Lenkkopflager 18, 20 drehbar angeordnet. Der Gabelschaft 16 ist einstückig mit einer Gabelbrücke 22 verbunden, die wiederum mit den beiden Gabelbeinen 24, wie im Ausführungsbeispiel dargestellt, einstückig verbunden ist.

Der Gabelschaft 16 weist einen unteren Bereich 26 auf. In dem Bereich 26 ist eine sich in Längsrichtung 28 des Gabelschafts erstreckende Aufnahmeöffnung 30 ausgebildet. Die Aufnahmeöffnung 30 ist im dargestellten Ausführungsbeispiel queroval ausgebildet (s. Fig. 2).

Ferner weist das erfindungsgemäße Vorbausystem einen Lenkervorbau 32 auf. Der Lenkervorbau 32 weist ein Hauptelement 34 auf. In Längsrichtung 36 des Hauptelements 34 bzw. in Fahrtrichtung 36 weist das Hauptelement 34 an einem vorderen Ende 38 eine Lenkeraufnahme beispielsweise zum klemmenden Fixieren eines Rennradlenkers 40 auf. Der Rennradlenker 40 kann auch einstückig mit dem Hauptelement 34 ausgebildet sein.

Am hinteren Ende 42 bzw. im hinteren Bereich 42 des Hauptelements 34 ist das Hauptelement 34 mit einem Vorbauschaft 44 verbunden, insbesondere einstückig ausgebildet. Der Vorbauschaft 44 ist in Fig. 1 im oberen Bereich, das heißt im Bereich des Hauptelements gekrümmt und verläuft sodann in Längsrichtung 28 des Gabelschafts 16. Der Vorbauschaft 44 ist in einem oberen Bereich des Gabelschafts 16 in einem Hohlraum 46 angeordnet. Im Querschnitt (Fig. 2) weist der Hohlraum 46 größere Innenabmessungen als die Außenabmessungen des Vorbauschafts 44 auf. Der Vorbauschaft 44 kann somit innerhalb des Hohlraums 46 in Längs- bzw. Fahrtrichtung 36 gebogen bzw. geflext werden.

Ein in Fig. 1, d. h. im montierten Zustand unteres Ende des Vorbauschafts ragt in die Aufnahmeöffnung 30 des Gabelschafts 16. Die Aufnahmeöffnung 30 weist im Wesentlichen Innenabmessungen auf, die den Außenabmessungen des Vorbauschafts 44 entsprechen, wobei sowohl der Vorbauschaft 44 als auch die Ausnahmeöffnung 30 queroval ist (s. Fig. 2). Über eine Klemmung oder ein Fixierelement wie eine Schraube 48 erfolgt ein Fixieren des Vorbauschafts 44 in der Aufnahmeöffnung 30 des Gabelschafts 16.

Je nach horizontaler Anordnung des Vorbauschafts 44 in der Aufnahmeöffnung 30 besteht zwischen einer Unterseite 50 des Hauptelements 34 und einer Oberseite 52 des Gabelschafts ein Abstand. Dieser wird von einem Abstandselement, einem sogenannten Spacer 54 überbrückt, um eine klar definierte Lage zu gewährleisten. Das zumindest eine Abstandselement 54 ist vorzugsweise aus elastischem Material hergestellt.

## Patentansprüche

1. Lenkervorbau, insbesondere für Rennradlenker, mit
einem Hauptelement (34), das zur Verbindung mit einem Lenker (40) an einem vorderen Ende (38) eine Lenkeraufnahme aufweist und
einem an einem dem vorderen Ende (38) gegenüberliegenden hinteren Ende (42) angeordneten Vorbauschaft (44), der mit einem Gabelschaft (16) einer Fahrradgabel verbindbar ist und einen unrunden Querschnitt aufweist,
**dadurch gekennzeichnet, dass**
der Querschnitt des Vorbauschafts (44) queroval ist, so dass der Vorbauschaft (44) in Längsrichtung (36) eine größere Flexibilität als quer zur Längsrichtung (36) aufweist.

2. Lenkervorbau nach Anspruch 1, **dadurch gekennzeichnet, dass** der Vorbauschaft (44) in Längsrichtung (36) des Hauptelements (34) eine geringere Abmessung als quer zur Längsrichtung (36) aufweist.

3. Vorbausystem, insbesondere für Rennradlenker, mit
einer Vorderradgabel mit zwei Gabelbeinen (24), die über eine Gabelbrücke (30) verbunden sind, wobei die Gabelbrücke (30) mit einem Gabelschaft (16) verbunden ist,
einem Lenkervorbau nach Anspruch 1 oder 2 und
einer im Gabelschaft vorgesehenen Aufnahmeöffnung (30) zur Aufnahme des Vorbauschafts (44), wobei
der Gabelschaft (16) in einem in Richtung des Hauptelements (34) des Lenkervorbaus weisenden Bereich einen Hohlraum (46) aufweist, in den der Vorbauschaft (44) ragt.

4. Vorbausystem nach Anspruch 3, **dadurch gekennzeichnet, dass** der Hohlraum (46) vom Vorbauschaft (44) durchdrungen ist.

5. Vorbausystem nach Anspruch 4, **dadurch gekennzeichnet, dass** der Vorbauschaft (44) den Hohlraum (46) insbesondere in Längsrichtung (36) nicht vollständig ausfüllt.

6. Vorbausystem nach einem der Ansprüche 3 - 5, **dadurch gekennzeichnet, dass** im Bereich des Hohlraums (46) eine Vorderseite und/oder eine Rückseite des Vorbauschafts (44) einen Abstand zu einer Innenseite des Gehäuseschafts (46) aufweist.

7. Vorbausystem nach einem der Ansprüche 3 - 6, **dadurch gekennzeichnet, dass** zur Verbindung des Vorbauschafts (44) mit dem Gabelschaft (16) eine Fixiereinrichtung (48) vorgesehen ist.

8. Vorbausystem nach Anspruch 7, **dadurch gekennzeichnet, dass** die Fixiereinrichtung den Vorbauschaft (44) in der Aufnahmeöffnung (30) klemmend fixiert.

9. Vorbausystem nach einem der Ansprüche 7 oder 8, **dadurch gekennzeichnet, dass** die Fixiereinrichtung ein insbesondere zwischen dem Vorbauschaft (44) und dem Gabelschaft (16) angeordnetes Klemmelement aufweist.

10. Vorbausystem nach einem der Ansprüche 3 - 9, **dadurch gekennzeichnet, dass** in Abhängigkeit der Position des Vorbauschafts (44) im Gabelschaft (16) zwischen einer Unterseite (50) des Hauptelements (34) des Lenkervorbaus und einer Oberseite (52) des Gabelschafts (16) mindestens ein insbesondere ringförmiges Abstandselement (54) angeordnet ist.

11. Vorbausystem nach Anspruch 10, **dadurch gekennzeichnet, dass** zumindest eines der ggf. mehreren Abstandselemente (54) aus elastischem Material hergestellt ist.

## Claims

1. A handlebar stem, in particular for racing bicycle handlebars, comprising
a main element (34) having a handlebar mount at a front end (38) for connection to a handlebar (40), and
a handlebar stem tube (44) arranged at a rear end (42) opposite the front end (38), which is connectible to the steerer tube (16) of a bicycle fork and has a non-round cross-section,
**characterized in that**
the cross-section of the handlebar stem tube (44) is of transverse oval shape, so that the handlebar stem tube (44) has a greater flexibility in the longitudinal direction (36) than transverse to the longitudinal direction (36).

2. The handlebar stem of claim 1, **characterized in that** the handlebar stem tube (44) has a smaller dimension in the longitudinal direction (36) of the main element (34) than transverse to the longitudinal direction (36).

3. A handlebar stem system, in particular for racing bicycle handlebars, comprising
a front wheel fork having two fork legs (24) which are connected via a fork bridge (30), wherein the fork bridge (30) is connected to a steerer tube (16),
a handlebar stem of claim 1 or 2, and
a receiving opening (30) provided in the steerer tube for receiving the handlebar stem tube (44), wherein
the steerer tube (16) comprises a cavity in an area facing in the direction of the main element (34) of the handlebar stem, into which cavity (46) the handlebar stem tube (44) protrudes.

4. The handlebar stem system of claim 3, **characterized in that** the cavity (46) is penetrated by the handlebar stem tube (44).

5. The handlebar stem system of claim 4, **characterized in that** the handlebar stem tube (44) does not completely fill the cavity (46), in particular in longitudinal direction (36).

6. The handlebar stem system of one of claims 3-5, **characterized in that** in the area of the cavity (46) a front side and/or a rear side of the handlebar stem tube (44) comprises a distance to an inner side of the housing tube (46).

7. The handlebar stem system of one of claims 3-6, **characterized in that** a fixing means (48) is provided for connection of the handlebar stem tube (44) to the steerer tube (16).

8. The handlebar stem system of claim 7, **characterized in that** the fixing means clampingly fixes the handlebar stem tube (44) in the receiving opening (30).

9. The handlebar stem system of one of claims 7 or 8, **characterized in that** the fixing means comprises a clamping element which is particularly arranged between the handlebar stem tube (44) and the steerer tube (16).

10. The handlebar stem system of one of claims 3-9, **characterized in that** depending on the position of the handlebar stem tube (44) in the steerer tube (16) at least a particularly annular spacing element (54) is arranged between the bottom side (50) of the main element (34) of the handlebar stem and a top side (52) of the steerer tube (16).

11. The handlebar stem system of claim 10, **characterized in that** at least one of the optionally several spacing elements (54) is made of an elastic material.

## Revendications

1. Potence, notamment pour guidon de bicyclette de course, comprenant
un élément principal (34) qui comprend à une extrémité avant (38) un support de guidon pour être attaché à un guidon (40) et
une tige de potence (44) disposée à une extrémité arrière (42) opposée à l'extrémité avant (38), qui peut être reliée à une tige de fourche (16) d'une fourche de bicyclette et qui a une section transversale non-ronde,
**caractérisée en ce que**
la section transversale de la tige de potence (44) est ovale transversalement, si bien que la tige de potence (44) ait une flexibilité plus grande dans la direction longitudinale (36) que transversalement à la direction longitudinale (36).

2. Potence selon la revendication 1, **caractérisée en ce que**, dans la direction longitudinale (36) de l'élément principal (34), la tige de potence (44) a une dimension moins grande que transversalement à la direction longitudinale (36).

3. Système de potence, notamment pour guidon de bicyclette de course, comprenant une fourche de roue avant avec deux tubes de fourche (24) reliés par un pont de fourche (30), le pont de fourche (30) étant relié à une tige de fourche (16),
une potence selon la revendication 1 ou 2 et
une ouverture de réception (30) prévue dans la tige de fourche pour la réception de la tige de potence (44),
la tige de fourche (16) comprenant, dans une zone orientée en direction de l'élément principal (34) de la potence, un espace creux (46) dans lequel la tige de potence (44) s'étend.

4. Système de potence selon la revendication 3, **caractérisé en ce que** l'espace creux (46) est traversé par la tige de potence (44).

5. Système de potence selon la revendication 4, **caractérisé en ce que** la tige de potence (44) ne comble pas complètement l'espace creux (46), notamment dans la direction longitudinale (36).

6. Système de potence selon l'une des revendications 3 à 5, **caractérisé en ce que**, dans la zone de l'espace creux (46), une face avant et/ou une face arrière de la tige de potence (44) est espacée d'une face intérieure de la tige de boîtier (46).

7. Système de potence selon l'une des revendications 3 à 6, **caractérisé en ce qu'**un système de fixation (48) est prévu pour relier la tige de potence (44) à la tige de fourche (16).

8. Système de potence selon la revendication 7, **caractérisé en ce que** le système de fixation fixe la tige de potence (44) par serrage dans l'ouverture de réception (30).

9. Système de potence selon l'une des revendications 7 ou 8, **caractérisé en ce que** le système de fixation comprend un élément de serrage situé notamment entre la tige de potence (44) et la tige de fourche (16).

10. Système de potence selon l'une des revendications 3 à 9, **caractérisé en ce que**, en fonction de la position de la tige de potence (44) dans la tige de fourche (16), au moins un élément d'espacement (54), notamment en forme d'anneau, est disposé entre un côté inférieur (50) de l'élément principal (34) de la potence et un côté supérieur (52) de la tige de fourche (16).

11. Système de potence selon la revendication 10, **caractérisé en ce qu'**au moins un de la pluralité éventuelle d'éléments d'espacement (54) est réalisé en un matériau élastique.
